Europäisches Patentamt

European Patent Office

Office européen des brevets

(19)

(11) Veröffentlichungsnummer: **0 401 501 B1**

(12)                    **EUROPÄISCHE PATENTSCHRIFT**

(45) Veröffentlichungstag der Patentschrift: **24.08.94**

(51) Int. Cl.5: **B30B 15/26**, B29C 43/58

(21) Anmeldenummer: **90107612.5**

(22) Anmeldetag: **21.04.90**

(54) **Verfahren zur Beeinflussung der Fliessfrontbewegung beim Auspressen von Pressmassen und Einrichtung zur Durchführung des Verfahrens.**

(30) Priorität: **13.05.89 DE 3915735**

(43) Veröffentlichungstag der Anmeldung:
**12.12.90 Patentblatt 90/50**

(45) Bekanntmachung des Hinweises auf die
Patenterteilung:
**24.08.94 Patentblatt 94/34**

(84) Benannte Vertragsstaaten:
**DE ES FR IT SE**

(56) Entgegenhaltungen:
**DE-A- 3 726 578**
**DE-C- 3 401 203**
**US-A- 4 076 780**
**US-A- 4 269 580**

(73) Patentinhaber: **Umformtechnik ERFURT GmbH**
**Schwerborner Strasse 1**
**D-99086 Erfurt (DE)**

(72) Erfinder: **Brüssel, Richard, Dipl.-Ing.**
**Hauptstrasse 106**
**D-7519 Sulzfeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beeinflussung der Fließfrontbewegung im Hinblick auf die gezielte Steuerung oder auf die Abschwächung von Umkehrflußvorgängen beim Auspressen von Preßmassen, insbesondere bei aus Faserverbundwerkstoffen hergestellten Harzmatten, im Formhohlraum (Kavität) von Preßwerkzeugen, deren mit der Preßkraft beaufschlagtes Werkzeugteil durch Abstützen an vier Gegenhaltezylindereinheiten ausgerichtet wird, wobei die Stellung der sich diagonal gegenüberliegenden Diagonal-Gegenhaltezylindereinheiten jeweils über eine Diagonalregelung aufeinander abgestimmt wird. Die Erfindung bezieht sich ferner auf eine Einrichtung an Pressen, deren mit der Preßkraft beaufschlagtes Werkzeugteil an vier Gegenhaltezylindereinheiten abgestützt ist, wobei jeweils die sich diagonal gegenüberliegenden Diagonal-Gegenhaltezylindereinheiten mit einer ihre Stellung ausregelnden Diagonalregelung ausgestattet sind.

Die Herstellung von Preßteilen aus Faserverbundwerkstoffen (beispielsweise in Form von Harzmatten oder Harzmattenpaketen) erfolgt üblicherweise auf parallel- oder gleichlaufgeregelten hydraulischen Pressen. Bei der aus der DE-PS 34 01 203 bekannten Ausführungsform stützt sich der Pressenstößel über Gewindespindeln - die in Abhängigkeit von der jeweiligen Preßwerkzeughöhe nach dem Werkzeugeinbau einmalig eingestellt werden - auf vier Gegenhaltezylindereinheiten ab; diese sind im Eckbereich des Pressentisches außerhalb der Preßwerkzeug-Aufspannfläche angeordnet.

Zur Erfassung des Abstandes zwischen dem Pressenstoßel und dem Pressentisch sind in dessen Eckbereich vier hochgenaue Wegmeßsysteme vorgesehen, welche als Wegaufnehmer mit den Gegenhaltezylindereinheiten als Stellglieder eine jeweils einer Ecke des Pressentisches zugeordnete Lageregelung bilden. Diese versucht, die vier Ecken des Pressenstößels (bzw. der Stoßel-Aufspannfläche) dadurch in einer zum Pressentisch (bzw. zur Tischaufspannfläche) parallelen Ebene zu halten, daß die von den Gegenhaltezylindereinheiten auf den Pressenstößel ausgeübten Gegenhaltekräfte in der erforderlichen Weise verändert werden. Da nicht nur auf Schiefstellungen des Pressenstößels (bzw. der zugehörigen Aufspannplatte), sondern auch auf asymmetrische Verbiegungen mit dem Bestreben reagiert, die sich daraus ergebenden Abweichungen zu beseitigen, ist es nicht möglich, aus der Messung und Auswertung der jeweils wirksamen Gegenhaltekräfte Schlußfolgerungen über die noch zu erläuternden Fließvorgänge im Preßwerkzeug zu ziehen und die in diesem Zusammenhang etwa erforderlichen Gegenmaßnahmen zu treffen.

Zur Herstellung von Preßteilen wird die Preßmasse in Form einer Harzmatte oder eines Harzmattenpaketes in das geöffnete Preßwerkzeug eingelegt und füllt unter Druck- sowie Hitzeeinwirkung schließlich den Formhohlraum (Kavität) aus. Da der Bemessung der Preßmasse entsprechend im Ausgangszustand lediglich eine Teilbedeckung des Formhohlraums vorliegt, treten Umkehrflüsse immer dann auf, wenn die Fließfront der Preßmasse während des Preßvorgangs die den Formhohlraum begrenzenden Tauchkanten zu unterschiedlichen Zeitpunkten erreicht und dort reflektiert wird. Dieser Vorgang führt bei der Verarbeitung von Faserverbundwerkstoffen zu einer unerwünschten Faserorientierung und zu ungleichmäßigen spezifischen Umformungsdrücken. Insbesondere bei Preßmassen mit unidirektionalen Fasern können Umkehrflüsse zu beachtlichen Festigkeitseinbussen führen, denen bisher durch eine von vornherein vorgesehene Überdimensionierung des Preßteils entgegengewirkt wurde. Bei zu lackierenden Preßteilen führen die durch Umkehrflüsse verursachten Porösitäten unter Umständen zu einem erheblichen Nacharbeitsaufwand.

Umkehrflüsse sind insbesondere dadurch bedingt, daß die Preßmasse nicht reproduzierbar in den Formhohlraum eingelegt wird oder während des Schließvorgangs des Preßwerkzeugs ihre Lage ändert. Selbst wenn die Preßmasse jedoch reproduzierbar eingelegt wird, können insbesondere spezifische Gewichtsunterschiede der Preßmasse und/oder Flächengewichtsschwankungen zu ungewollten Umkehrflüssen führen.

Der Erfindung liegt die Aufgabe zugrunde, ein Verfahren und eine zur Durchführung des Verfahrens geeigneter Einrichtung anzugeben, mit denen sich die Bewegung der Fließfront entweder im Hinblick auf die gezielte Steuerung von Umkehrflußvorgängen oder im Hinblick zumindest auf deren Abschwächung beeinflussen läßt. Das Verfahren und die Einrichtung sollen darüber hinaus gegebenenfalls so ausgestaltet sein, daß der Umkehrfluß iterativ ausgeregelt wird, d.h. daß aufgrund der zuvor gewonnenen Informationen die in dem nachfolgenden Arbeitszyklus zu verarbeitende Preßmasse duch eine Lagekorrektur in eine günstigere Preßstellung gebracht wird.

Die gestellte Aufgabe wird durch ein Verfahren mit den Merkmalen des Anspruchs 1 gelöst. Der Grundgedanke der Erfindung besteht danach darin, die von den vier Gegenhaltezylindereinheiten festgelegte Regelfläche durch regelungstechnische Zusammenfassung der sich jeweils diagonal gegenüberliegenden Gegenhaltezylindereinheiten in zwei Fließfrontsensoren aufzuteilen, mittels derer sich jeweils die Lage des zugehörigen Zentrums der auf die Preßmasse ausgeübten Wirkkraft ermitteln läßt.

Durch die Unterteilung der Regelfläche in zwei unabhängige Meßkreise lassen sich unverfälschte Informationen über etwaige, in deren Bereich wirksame Kippmomente gewinnen, die insbesondere durch die Kraftverteilung im Preßwerkzeug und damit durch im Formhohlraum auftretende Fließvorgänge verursacht sind.

Der in Rede stehende Lösungsvorschlag bietet also die Möglichkeit, auf die Bewegung der Fließfront zu schließen und bei Abweichungen vom Sollfluß Korrekturmaßnahmen zu ergreifen.

Im einzelnen wird das Verfahren in der Weise ausgeführt, daß unmittelbar nach Auspreßbeginn die Preßkraft und die jeweils von den Gegenhaltezylindereinheiten ausgehenden Gegenhaltekräfte bestimmt werden, wobei aus der Größe der Preßkraft und aus einem etwaigen Differenzbetrag zwischen den Gegenhaltekräften der Diagonal-Gegenhaltezylindereinheiten jeweils die Lage des Zentrums der auf die Preßmasse ausgeübten Wirkkraft auf den Verbindungslinien zwischen den Diagonal-Gegenhaltezylindereineiten (d.h. auf der durch die Diagonal-Gegenhaltezylindereinheiten vorgegebenen Diagonale) bezüglich eines Nullpunktes in Form eines Abstandswertes ermittelt wird. Anschließend wird während des fortschreitenden Auspreßvorgangs aufgrund der fortlaufend festgestellten Abstandswerte bis zum Abschluß der Fließvorgänge die Stellung der Diagonal-Gegenhaltezylindereinheiten in der Weise verändert, daß die durch Schrägstellung des beweglichen Werkzeugteils hervorgerufene Erweiterung des Formhohlraum-Querschnitts die Fließfrontbewegung in Richtung dieser Erweiterung unterstützt. Im Gegensatz zu normalen Parallelregelungen wird beim Erfindungsgegenstand - abhängig von den unter Einsatz der Fließfrontsensoren gelieferten Informationen - das bewegliche Werkzeugteil (im Normalfall das Werkzeugoberteil) bewußt in der Weise schräg oder unparallel eingestellt, daß die Neigung (und die sich daraus ergebende Erweiterung des Formhohlraum-Querschnitts in Richtung der Neigung) einem unerwünschten Fließfrontverlauf entgegenwirkt. Falls also beispielsweise das Wirkkraftzentrum auf einer der bei den Diagonalen rechts neben dem angestrebten Nullpunkt liegt, wird das bewegliche Werkzeugteil über die zugehörigen Diagonal-Gegenhaltezylindereinheiten in der Weise schräggestellt, daß sich der Formhohlraum-Querschnitt nach links erweitert. Die in dieser Weise ausgerichtete Erweiterung führt zu einer Verzögerung der Fließfrontbewegung nach rechts und erleichtert diese nach links. Die Schrägstellung des beweglichen Werkzeugteils wird dabei aufgrund der fortlaufend durchgeführten Ermittlung der Lage des Wirkkraftzentrums entsprechend angepaßt. Aus der Größe der Gegenhaltekraft-Differenz kann insofern auf die Lage des Wirkkraftzentrums geschlossen werden, als die auf die Preßmasse wirkende Preßkraft - bedingt durch das Zusammenwirken der Diagonal-Gegenhaltezylindereinheiten - jeweils der Gegenhaltezylindereinheit mit der kleineren Gegenhaltekraft zugeordnet ist.

Mit dem Ausdruck "Gegenhaltezylindereinheit" soll zum Ausdruck gebracht werden, daß die Erfindung auch an Pressen anwendbar ist, die in jedem Eckbereich des Pressentisches - wie der Gegenstand der US-PS 4 076 780 - jeweils mehrere zusammenwirkende Gegenhaltezylinder aufweisen. Der Zeitpunkt, zu dem nach Auspreßbeginn mittels der Fließfrontsensoren erstmals die Lage des Wirkkraftzentrums auf den in Frage kommenden Diagonalen ermittelt wird, läßt sich anhand einer Wegmessung festlegen; aus dem Referenzaufnahmehub (entsprechend dem Wegstück, bei dem das Werkzeugober- und -unterteil im Leerzustand aneinander zur Anlage kommen), der Höhe der Preßmasse und der Dicke des herzustellenden Preßteils läßt sich der Pressenhub bestimmen, welcher den Beginn des Auspreßvorgangs zur Folge hat. Stattdessen oder ergänzend zu dieser Vorgehensweise kann das Verfahren im Rahmen der Erfindung auch derart ausgeführt werden, daß aus einer zuvor festgelegten Größe des Druckanstiegs im Preßantrieb auf den Auspreßbeginn geschlossen wird.

Vorzugsweise läuft das Verfahren weiterhin derart ab, daß im Anschluß an die zeitlich erste Ermittlung der Abstandswerte auf den beiden Diagonalen das bewegliche Werkzeugteil unmittelbar in Abhängigkeit von der augenblicklichen Größe der Abstandswerte durch Stellungsanpassung der Diagonal-Gegenhaltezylindereinheiten ausgerichtet wird (Anspruch 2). Dies kann insbesondere in der Weise geschehen, daß die Neigung des beweglichen Werkzeugteils linear mit zunehmender Größe der Abstandswerte vergrößert wird; abhängig von den Betriebsverhältnissen kann gegebenenfalls jedoch auch eine nicht-lineare Neigungsbeeinflussung zur Anwendung kommen.

Mit Rücksicht auf den Schutz des Preßwerkzeugs ist die Schrägstellung des beweglichen Werkzeugteils durch Vorgabe einer Größtneigung zu begrenzen und/oder der Auspreßvorgang - insbesondere durch' Herabsetzen der Preßkraft - in der geeigneten Richtung anzupassen. Falls also die Lage der Abstandswerte außerhalb eines Sollbereiches liegt, wird das erfindungsgemäße Verfahren entweder mit einer der Größtneigung entsprechenden Schrägstellung des beweglichen Werkzeugteils und/oder ohne vollständiges Auspressen der Preßmasse (beispielsweise durch die ersehnte Herabsetzung der Preßkraft) weitergeführt.

Bei einer vorteil haften Ausgestaltung des Verfahrens wird die Stellung der Diagonal-Gegenhaltezylindereinheiten spätestens nach Abschluß der Fließvorgänge bis gegen Ende des Auspreßvorgangs - ebenso wie bis zum Zeitpunkt der zeitlich ersten Ermittlung der Lage des Wirkkraftzentrums auf den Verbindungslinien - über eine Parallelregelung eingestellt (Anspruch 3). Diese ist zweckmäßig in der Weise aufgebaut, daß die Summe der Gegenhaltekräfte der Diagonal-Gegenhaltezylindereinheiten jeweils konstant gehalten wird.

Die vom Preßantrieb ausgeübte Preßkraft und die Gegenhaltekräfte lassen sich dabei insbesondere über Druckmessungen bestimmen (Anspruch 4). Im einfachsten Fall wird die Preßkraft bzw. werden die Gegenhaltekräfte durch Drucksensoren erfaßt, welche den im Hydraulikmittel vorhandenen Flüssigkeitsdruck ermitteln.

Das Verfahren kann vorteilhaft in der Weise ausgeführt werden, daß die Stellung (d.h. der Arbeitshub) der Diagonal-Gegenhaltezylindereinheiten im Anschluß an die zeitlich erste Ermittlung der Abstandswerte spätestens bis zum Ende des Auspreßvorgangs gegen Null geführt werden kann (Anspruch 5). Eine derartige Vorgehensweise ist also darauf ausgerichtet, das bewegliche Werkzeugteil im Laufe des Auspreßvorgangs, erforderlichenfalls durch fortlaufende Anpassung der Schrägstellung, in der Weise einzuregeln, daß das Wirkkraftzentrum sich dem durch die beiden Verbindungslinien vorgegebenen Nullpunkt zumindest annähert.

Im Rahmen der erfindungsgemäßen Lehre kann die Stellung der Diagonal-Gegenhaltezylindereinheiten im Anschluß an die zeitlich erste Ermittlung der Abstandswerte auch in der Weise beeinflußt werden, daß die Abstandswerte bis zum Ende des Auspreßvorgangs zeitabhängig einen gewünschten Verlauf nehmen; auf diese Weise - die eine fortlaufende Ermittlung und Beobachtung zumindest der Abstandswerte (eventuell auch der Größe der Wirkkraft) voraussetzt - läßt sich zumindest die Lage der Wirkkraft bezüglich des Nullpunktes gezielt beeinflussen.

Die Möglichkeit, die Lage des Wirkkraftzentrums zu bestimmen, läßt sich auch für eine iterative Beeinflussung der Fließvorgänge ausnutzen. Dabei wird die nach Auspreßende zugeführte neue Preßmasse in der Weise bewegt, daß sie bis zum Abschluß des Zuführvorgangs eine Korrekturbewegung ausführt. Mittels dieser werden die Abstandswerte ausgeglichen, die anläßlich der zeitlich ersten Ermittlung der Lage des Wirkkraftzentrums - unmittelbar nach Einleiten des Auspreßvorgangs für die vorhergehende Preßmasse - festgestellt worden sind (Anspruch 6). Der Vorteil dieser Vorgehensweise besteht darin, daß jeweils die nach einem Arbeitszyklus zugeführte neue Preßmasse - unter Einsatz einer steuerbaren Zuführeinheit - vor Auspreßbeginn von vornherein in eine für den betreffenden Arbeitszyklus günstigere Preßstellung gebracht wird.

Anhand der Abstandswerte und der Größe des Wirkkraftzentrums kann ohne weiteres das Wirkkraftzentrum nach Größe und Lage bezüglich eines zu einer Bezugsebene des Preßwerkzeugs parallelen x-, y-Achsenkreuzes ermittelt werden (Anspruch 7). Die dabei gewonnenen Informationen lassen sich für die Steuerung einer Zuführeinheit mit NC-Achsen einsetzen.

Vorzugsweise wird die Preßmasse in der Weise transportiert, daß sie vor Eintritt in das Preßwerkzeug (zunächst) eine Korrekturbewegung lediglich in einer Richtung des x-, y-Achsenkreuzes ausführt (Anspruch 8); beispielsweise kann zunächst eine Korrekturbewegung quer zur Längserstreckung der Preßmasse ausgelöst werden, bevor diese - mit anschließend auch in Längsrichtung angepaßter Lage - im Preßwerkzeug abgelegt wird.

Abhängig von der Ausbildung der Preßmasse und des Formhohlraums des Preßwerkzeugs läßt sich der nachfolgende Arbeitszyklus unter Umständen dadurch günstig beeinflussen, daß die neue Preßmasse bis zum Abschluß des Zuführvorgangs als Ausgleichsbewegung auch eine Drehbewegung ausführt (Anspruch 9).

Die Oberwachung des Preßvorgangs läßt sich dadurch erleichtern bzw. verbessern, daß die Lage des Wirkkraftzenrums auf den Verbindungslinien und/oder die Lage des Gesamtwirkkraftzentrums während des Auspreßvorgangs zumindest zeitweilig sichtbar gemacht wird (Anspruch 10). Auf diese Weise kann beispielsweise eine im Formhohlraum auftretende Verschiebung der Preßmasse erkannt und damit die Möglichkeit geschaffen werden, das betreffende Preßteil zu identifizieren und - eventuell auch automatisch - aus dem weiteren Verarbeitungsprozeß auszusondern.

Die zur Durchführung des Verfahrens geeignete Einrichtung an Pressen, deren mit der Preßkraft beaufschlagtes Werkzeugteil an vier Gegenhaltezylindereinheiten mit einer die Stellung der Diagonal-Gegenhaltezylindereinheiten ausregelnden Diagonalregelung abgestützt ist, weist folgende Merkmale auf:

- die Gegenhaltezylindereinheiten und der Preßantrieb sind mit Druckmeßsensoren zur Ermittlung der Gegenhaltekräfte und der Preßkraft ausgestattet;
- die Druckmeßsensoren der Diagonal-Gegenhaltezylindereinheiten sind mit dem Druckmeßsensor des Preßantriebs jeweils zu einem Fließfrontsensor zusammengefaßt, mit dem aus der Größe der Preßkraft und einer etwaigen Gegenhaltekraft-Differenz die Größe und Lage des Zentrums der auf die Preßmasse ausgeübten Wirkkraft auf den Verbindungslinien zwischen den Diagonal-Gegenhaltezylindereinheiten (d.h. auf den dadurch festgelegten Diagonalen) bezüglich eines Nullpunktes feststellbar ist;

- die Diagonal-Gegenhaltezylindereinheiten sind jeweils mit einer Steuereinheit ausgestattet, die während einer einstellbaren Zeitdauer abhängig von der Lage des Wirkkraftzentrums jeweils die Stellung der Diagonal-Gegenhaltezylindereinheiten in der Weise beeinflußt, daß durch Schrägstellen des beweglichen Werkzeugteils der Formhohlraum-Querschnitt eine Erweiterung aufweist, welche die Fließfrontbewegung auf der dem Wirkkraftzentrum gegenüberliegenden Seite des Nullpunktes unterstützt (Anspruch 11).

Das wesentliche Merkmal der Einrichtung besteht also in der Verwendung einer zeitweilig einschaltbaren Steuereinheit, welche - beispielsweise linear - mit größer werdender Entfernung des Wirkkraftzentrums vom Nullpunkt durch Ansteuern der zugehörigen Diagonal-Gegenhaltezylindereinheiten die Neigung des beweglichen Werkzeugteils in diesem Bereich vergrößert, und zwar mit Ausrichtung auf die bezüglich des Wirkkraftzentrums andere Seite des Nullpunktes.

Bei einer vorteilhaften Ausgestaltung des Erfindungsgegenstandes ist dem Fließfrontsensor ein Rechner nachgeschaltet, mit dem aufgrund der festgestellten Größe und Lage der Wirkkräfte fortlaufend die augenblickliche Größe und Lage des Wirkkraftzentrums bezüglich eines zu einer Bezugsebene des Preßwerkzeugs parallelen x-, y-Achsenkreuzes ermittelt wird (Anspruch 12).
Über eine Anzeigeeinheit kann dabei die Lage des Wirkkraftzentrums erkennbar gemacht werden (Anspruch 13).

Über die vom Rechner erzeugten Steuersignale - entsprechend den x-, y-Abstandswerten, die anläßlich der zeitlich ersten Ermittlung der Lage des Wirkkraftzentrums errechnet worden sind - kann die Zuführeinheit für die Preßmasse in der Weise angetrieben werden, daß die nach Auspreßende zugeführte neue Preßmasse bis zum Abschluß des Zuführvorgangs zusätzlich eine der Größe dieser Abstandswerte entsprechende Korrekturbewegung ausführt (Anspruch 14), also unter Berücksichtigung der im vorausgehenden Arbeitszyklus gewonnenen Informationen von vornherein eine für den Preßvorgang günstigere Preßstellung einnimmt.

Die Erfindung wird nachfolgend anhand der Zeichnung im einzelnen erläutert.
Es zeigen:

Fig. 1 stark schematisiert den Aufbau einer Presse in bekannter Ausführung mit Gegenhaltezylindereinheiten, deren Stellung jeweils über eine Diagonalregelung aufeinander abgestimmt wird (dargestellt ist der Übersichtlichkeit halber jeweils nur die linke, vornliegende und di rechte, hintenliegende Gegenhaltezylindereinheit),

Fig. 2a bis d für eine Presse mit parallel geregelten Gegenhaltezylindereinheiten die durch asymmetrische Anordnung der Preßmasse im Bereich des Preßwerkzeugs hervorgerufenen Vorgänge bzw. Zustände,

Fig. 2e ein den Fig. 2a bis d zugeordnetes Kraft-Zeit-Diagramm,

Fig. 3a bis d für eine erfindungsgemäß ausgestaltete und betriebene Presse die durch asymmetrische Anordnung der Preßmasse im Bereich des Preßwerkzeugs hervorgerufenen Vorgänge bzw. Zustände,

Fig. 3e ein den Fig. 3a bis d zugeordnetes Kraft-Zeit-Diagramm,

Fig. 4 schematisiert eine Anordnung, deren sich diagonal gegenüberliegende Diagonal-Gegenhaltezylindereinheiten zur Ermittlung der augenblicklichen Lage des Wirkkraftzentrums herangezogen werden,

Fig. 5a, b schematisch die Kraft- und Abmessungsverhältnisse, anhand derer sich die Lage des Wirkkraftzentrums auf den in Fig. 4 dargestellten Verbindungslinien (Diagonalen) ermitteln läßt,

Fig. 6a bis d in Form einer schematisierten Draufsicht auf die Preßwerkzeug-Tauchkanten unter optimalen Betriebsbedingungen die Fließfrontbewegung einer zunächst rechteckförmigen Preßmasse,

Fig. 7a bis d in schematisierter Draufsicht auf die Preßwerkzeug-Tauchkanten die während des Preßvorgangs vor sich gehende Fließfrontbewegung für eine asymmetrisch eingelegte Preßmasse und

Fig. 8 in Form eines Schemabildes den Gesamtaufbau des Erfindungsgegenstandes.

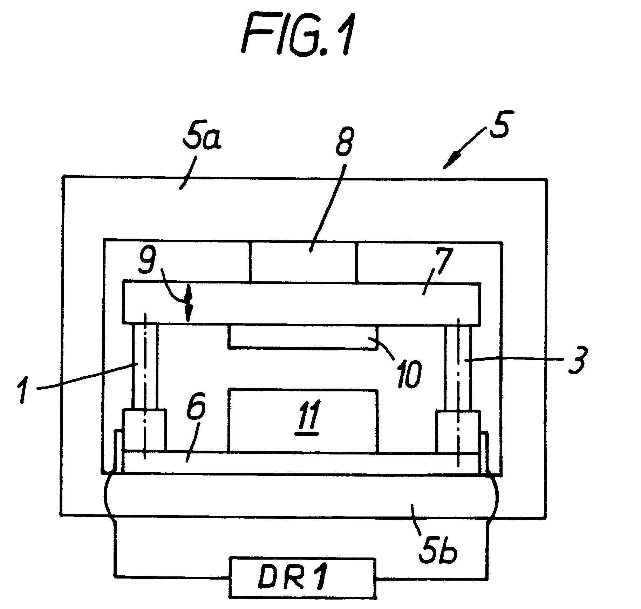

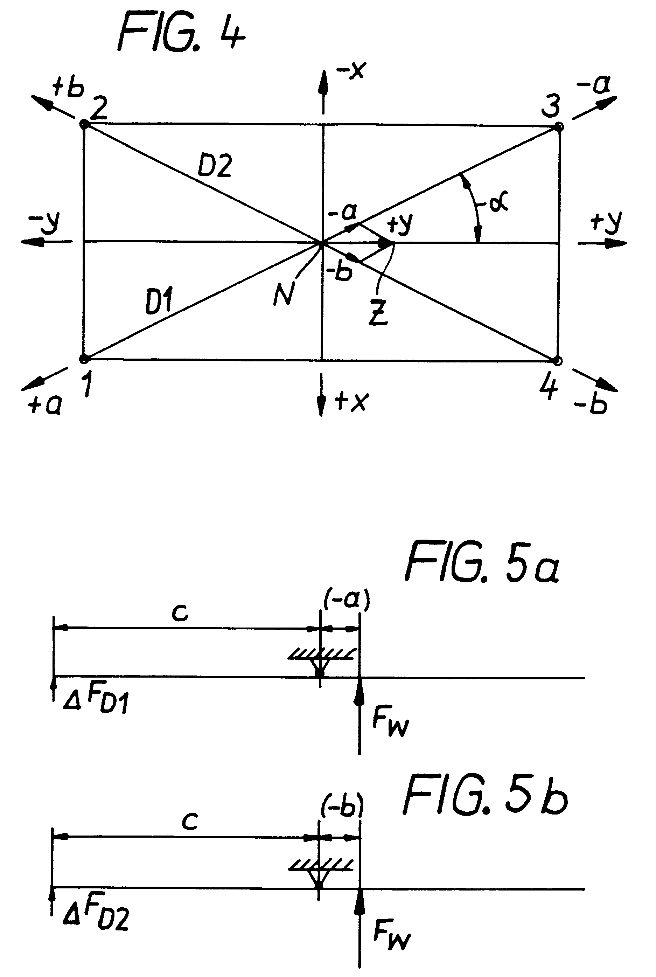

Die in Fig. 1 dargestellte hydraulische Presse zur Herstellung von Preßteilen aus Faserverbundwerkstoffen weist neben den hier besonders interessierenden Gegenhaltezylindereinheiten 1 bis 4 (vgl. dazu insbesondere Fig. 4) ein Pressengestell 5 mit einem Pressentisch 6 und einem Pressenstößel 7 auf, der über einen hydraulischen Preßantrieb 8 in lotrechter Richtung (Doppelpfeil 9) verfahrbar am oberen Querhaupt 5a des Gestells 5 gehalten ist; demgegenüber ist der Pressentisch 6 an dem unteren Querhaupt 5b des Gestells befestigt.

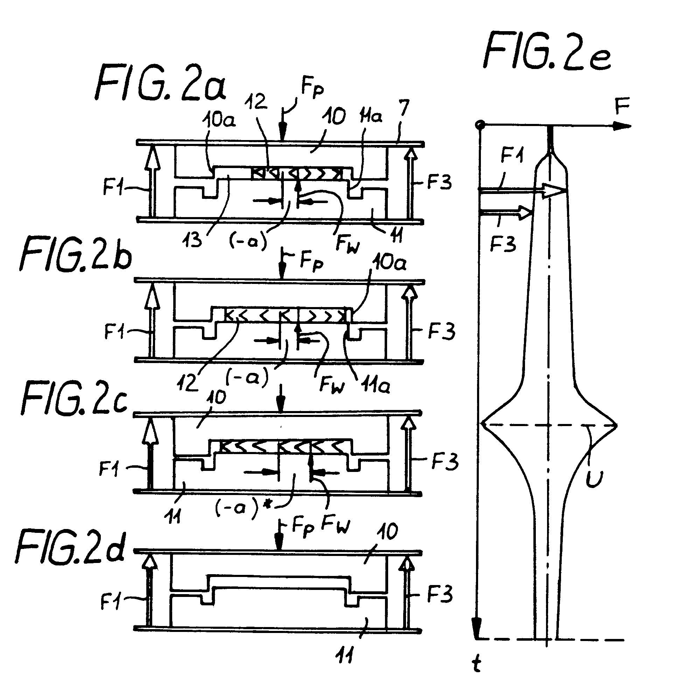

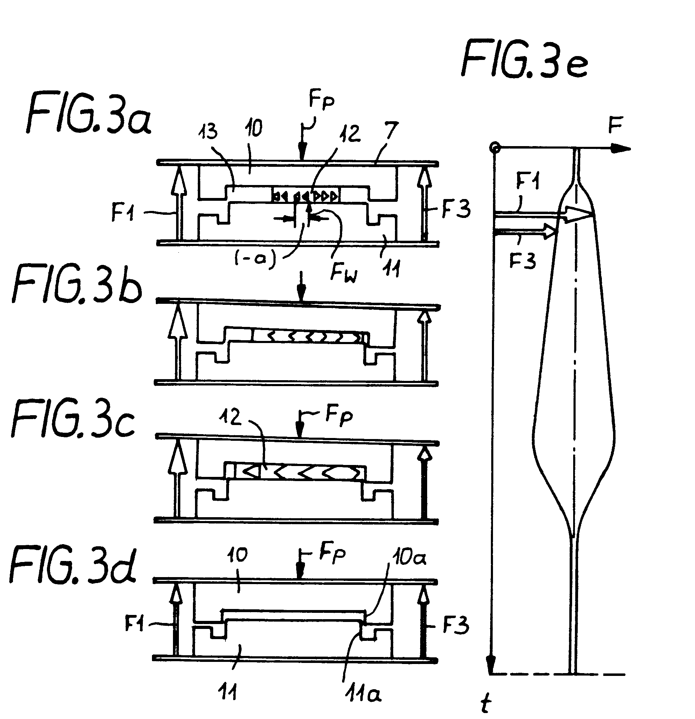

Die Teile 7 und 6 tragen jeweils einen Bestandteil des Preßwerkzeugs, nämlich das Preßwerkzeug-Oberteil 10 bzw. das Preßwerkzeug-Unterteil 11; diese begrenzen miteinander während des Preßvorgangs den das Preßteil erzeugenden Formhohlraum (vgl. dazu Fig. 2a bis d, Fig. 3a bis d).

Der Parallellauf des Pressenstößels 7 bezüglich des Pressentisches 6 wird dadurch herbeigeführt, daß ersterer sich an den ihm zugewandten Gegenhalteflächen der vier paarweise mit einer Diagonalregelung DR ausgestatteten Gegenhaltezylindereinheiten abstützt; über eine derartige Diagonalregelung werden also einerseits die sich diagonal gegenüberliegenden, dargestellten Diagonal-Gegenhaltezylindereinheiten 1 und 3, als auch die weitere Diagonale festlegenden, nicht dargestellten Diagonal-Gegenhaltezylindereinheiten 2 und 4 (vgl. dazu Fig. 4) hinsichtlich ihrer Stellung ausgeregelt. Die Diagonalregelung arbeitet dabei in der Weise, daß jede zugehörige Diagonale (zumindest) annähernd parallel zur Ebene des Pressentisches 6 bzw. der Aufspannplatte des Pressentisches liegt, wobei die Summe der Gegenhaltekräfte konstant gehalten wird, die von den jeweils zusammenwirkenden Diagonal-Gegenhaltezylindereinheiten 1 und 3 bzw. 2 und 4 ausgehen.

Umkehrflüsse mit den sich daraus ergebenden nachteiligen Folgen treten dann auf, wenn die Preßmasse 12 - wie in Fig. 2a dargestellt - beispielsweise asymmetrisch (Abstandswert: - a) in den Formhohlraum 13 (Kavität) eingelegt wird oder durch Verschieben eine derartige Lage einnimmt.

Das Einleiten des Preßvorgangs durch Aufbringen der Preßkraft $F_P$ hat zur Folge, daß das Zentrum der an der Preßmasse 12 angreifenden Wirkkraft $F_W$ um den Abstandswert (- a) bezüglich der Preßkraft nach rechts versetzt liegt und das Werkzeug-Oberteil 10 infolgedessen eine Kippbewegung im Gegenuhrzeigersinn auszuführen versucht. Dies hat zur Folge, daß die in Richtung auf eine Parallelausrichtung des Werkzeug-Oberteils wirksamen Diagonal-Gegenhaltezylindereinheiten unterschiedlich große Gegenhaltekräfte erzeugen müssen: die Gegenhaltekraft F1 der Gegenhaltezylindereinheit 1 ist größer als die Gegenhaltekraft F3 der Gegenhaltezylindereinheit 3. Die geschilderten Verhältnisse bleiben während der sich anschließenden Zeitspanne des Preßvorgangs im wesentlichen unverändert mit der Maßgabe, daß der durch den Preßvorgang ausgelöste Preßmassenstrom sich den Tauchkanten 10a und 11a - welche im Zusammenwirken miteinander den Formhohlraum 13 nach außen abschließen - auf der rechten Seite des Preßwerkzeugs bereits weiter angenähert hat als auf der linken Seite (Fig. 2b). Die Gegenhaltekraft F1 ist dabei - bedingt durch die asymmetrische Lage des Zentrums der Wirkkraft $F_W$ - stets größer als die Gegenhaltekraft F3.

Mit der Fortsetzung des Preßvorgangs erreicht der Preßmassenstrom bzw. die Fließfront der Preßmasse schließlich die rechtsliegenden Tauchkanten 10a, 11a und wird dort mit den sich daraus ergebenden Umkehrflußvorgängen reflektiert (Fig. 2c). Diese Vorgänge führen dazu, daß sich das Zentrum der Wirkkraft $F_W$ schlagartig weiter nach rechts verschiebt und nunmehr bezüglich der Preßkraft $F_P$ den Abstandswert (- a)* aufweist. Auf diesen "Umkehrflußschlag" - angedeutet in Fig. 2e durch die plötzlich größer werdende Differenz U zwischen den Gegenhaltekräften F1 und F3 - kann die auf Einstellen einer Parallellage ausgelegte Diagonalregelung nicht ausreichend schnell reagieren. Die plötzliche Veränderung der Kräfteverhältnisse durch den Umkehrflußschlag hat zur Folge, daß das Werkzeug-Oberteil 10 eine Kippbewegung im Gegenuhrzeigersinn ausführt (Fig. 2c) und dadurch zeitweilig die Bewegung der Preßmasse gerade in der nicht erwünschten Richtung, nämlich in der Darstellung nach rechts, unterstützt. Unter Einwirkung der Diagonalregelung wird die Neigung des Werkzeug-Oberteils 10 (mit der sich daraus erge-benden Erweiterung des Formhohlraum-Quer-schnitts nach rechts) allmälich gegen Null zurückgeführt. Gegen Ende des Auspreßvorgangs nimmt das Werkzeug-Oberteil 10 (zumindest annähernd) wieder die in Fig. 2d angedeutete Parallellage ein; der Formhohlraum 13 weist - ebenso wie das nicht dargestellte ausgehärtete Preßteil - dementsprechend einen rechteckförmigen Querschnitt auf.

Dieser Endzustand läßt jedoch nicht erkennen, daß das Preßteil - bedingt durch die Auswirkungen der Umkehrflußvorgänge - unter Umständen eine nicht erwünschte Faserorientierung und/oder eine Dichte-Verteilung aufweist, die es gegebenenfalls mit Rücksicht auf die geforderte Festigkeit und/oder Oberflächenbeschaffenheit nur beschränkt verwendbar oder unbrauchbar macht bzw. machen.

Ausgehend von den zuvor beschriebenen Nachteilen wird mit der Erfindung der Vorschlag unterbreitet, abhängig von bestimmten erfaßbar ge-machten Betriebszuständen unerwünschten Fließ-vorgängen bzw. Umkehrflußvorgängen durch Schrägstellen des beweglichen Werkzeugteils entgegenzuwirken. Der für den Preßvorgang benötigte Zeitabschnitt wird dazu - regelungstechnisch - nacheinander in einen Zeitabschnitt mit Parallelregelung, mit Umkehrflußbeeinflussung und erneut mit Parallelregelung des beweglichen Werkzeugteils unterteilt.

Nach dem Beschicken des Preßwerkzeugs mit der zu verarbeitenden Preßmasse 12 und dem Einleiten des Schließvorgangs wird zunächst das bewegliche Werkzeugteil, im Ausführungsbeispiel das Werkzeug-Oberteil 10, unter Einfluß der Diagonalregelung in Parallellage gehalten (Fig. 3a), und zwar so lange, bis unmittelbar nach Auspreßbeginn aus der Größe der Preßkraft $F_P$ und dem Differenzbetrag zwischen den Gegenhaltekräften F1 und F3 der zusammenwirkenden Diagonal-Gegenhaltezylindereinheiten 1 und 3 die Lage des Zentrums der auf die Preßmasse 12 ausgeübten Wirkkraft $F_W$ auf der Verbindungslinie zwischen den Diagonal-Gegenhaltezylindereinheiten ermittelt worden ist, und zwar bezüglich eines Nullpunktes N (vgl. dazu Fig. 4) in Form des Abstandswertes (- a).

Die Bestimmung der Lage des Wirkkraftzentrums auf der Verbindungslinie zwischen den beiden anderen Diagonal-Gegenhaltezylindereinheiten 2 und 4 (vgl. dazu Fig. 4) erfolgt in entsprechender Weise und wird daher im Zusammenhang mit den hier interessierenden Fig. 3a bis e nicht weiter erläutert. Abhängig von der Größe des Abstandswertes, um den das Wirkkraftzentrum wegen der asymmetrischen Preßstellung der Preßmasse bezüglich des Nullpunktes N und bezüglich der Preßkraft $F_P$ nach rechts versetzt liegt, wird anschließend durch Ausregeln der Diagonal-Gegenhaltezylindereinheiten 1 und 3 das Werkzeug-Oberteil 10 (im einfachsten Fall mit linearer Abhängigkeit) im Uhrzeigersinn gekippt und in die in Fig. 3b angedeutete Schrägstellung gebracht. Der Querschnitts des Formhohlraums 12 erweitert sich dementsprechend in einer Richtung, welche die Bewegung des Preßmassenstroms nach rechts verzögert und nach links unterstützt. Die Lage des Wirkkraftzentrums wird dabei im Anschluß an die zeitlich erste Ermittlung anhand der Größe der Preßkraft und der Gegenhaltekraft-Differenz fortlaufend bestimmt und die Neigung des Werkzeug-Oberteils an den jeweils geltenden Abstandswert angepaßt.

Auf diese Weise läßt sich durch fortlaufende Beeinflussung der Stellung der Gegenhaltezylindereinheiten 1 und 3 die Form des Formhohlraum-Querschnitts derart an die Fließvorgänge anpassen, daß die Entstehung zumindest eines ausgeprägten Umkehrflußschlages vermieden wird; das Kraft-Zeit-Diagramm gemäß Fig. 3e zeigt dementsprechend keine Gegenhaltekraft-Differenz, die - wie in Fig. 2e dargestellt - plötzlich auf den Differenzwert U ansteigt. Im Idealfall kann das fortlaufende Ausregeln der Lage des Werkzeug-Oberteils 10 dazu führen, daß die Fließfront der Preßmasse 13 die Tauchkanten 10a, 11a allseitig zum selben Zeitpunkt erreicht und infolgedessen die Entstehung unerwünschter Faserorientierungen und/oder über den Preßteil-Querschnitt ungleichmäßiger Eigenschaften verhindert wird.

Sobald die Fließfront sämtliche Tauchkanten des Preßwerkzeugs erreicht hat, wird die Schrägstellung des Werkzeug-Oberteils 10 - abhängig von der damit im Zusammenhang stehenden Änderung der Abstandswerte - durch eine Kippbewegung im Gegenuhrzeigersinn (Fig. 3c) gegen Null gefahren, bevor gegen Ende des Preßvorgangs erneut die Diagonalregelung in Betrieb gesetzt wird und das Werkzeug-Oberteil parallel beispielsweise zum Pressentisch ausregelt (Fig. 3d). Die Gegenhaltekräfte F1 und F3 sind dann (im Idealfall) gleich groß (vgl. dazu Fig. 3e).

Die geometrischen und kräftemäßigen Größenverhältnisse, aufgrund derer sich nach Auspreßbeginn (also bei auf die Preßmasse einwirkender Preßkraft $F_P$) die Lage des Zentrums Z der Wirkkraft $F_W$ ermitteln läßt, werden nachfolgend anhand der Fig. 4 und 5a, b erläutert.

Die im Eckbereich des Pressentisches 6 außerhalb des Preßwerkzeugs 10, 11 (vgl. dazu Fig. 1) angeordneten Gegenhaltezylindereinheiten sind jeweils paarweise zu zusammenwirkenden Diagonal-Gegenhaltezylindereinheiten 1, 3 bzw. 2, 4 zusammengefaßt; ihre Verbindungslinien oder Diagonalen D1 bzw. D2 schneiden sich in dem bereits erwähnten Nullpunkt N.

Die vom Nullpunkt ausgehenden Diagonalen-Abschnitte in Richtung auf die Gegenhaltezylindereinheiten 1 und 2 sind mit (+ a) bzw. (+ b), diejenigen in Richtung auf die Gegenhaltezylindereinheiten 3 und 4 mit (- a) bzw. (- b) bezeichnet.

Diese Abstandswerte lassen sich erforderlichenfalls mittels eines Rechners umrechnen auf die Koordinaten eines rechtwinkligen x-, y-Achsenkreuzes: die x-, y-Abstandswerte gelten dabei als positiv, soweit sie - ausgehend vom Nullpunkt N - auf dem Teil des Achsenkreuzes liegen, welcher der Verbindungslinie zwischen den Gegenhaltezylindereinheiten 1, 4 bzw. 3, 4 zugewandt ist.

Fig. 4 zeigt als Beispiel das Ergebnis der Ermittlung der Lage des Wirkkraftzentrums Z unmittelbar nach Auspreßbeginn: die Wirkkraft $F_W$ liegt dabei bezüglich des Nullpunktes N um den Abstandswert (- a) bzw. den vom Betrag her gleich großen Abstandswert (- b) versetzt auf der Verbindungslinie D1 bzw. D2.

Für die Lage des Wirkkraftzentrums Z im x-, y-Achsenkreuz ergibt sich somit: $y = 2 \times a \cos \alpha$ (da a = b).

Die Größe der Wirkkraft $F_W$ läßt sich dabei aus der Größe der Preßkraft $F_P$ abzüglich der von den Gegenhaltezylindereinheiten 1 bis 4 ausgeübten Gegenhaltekräfte (F1....F4) errechnen.

Ausgehend von der Gegenhaltekraft-Differenz $\Delta F_{D1}$ zwischen den Gegenhaltekräften der Diagonal-Gegenhaltezylindereinheiten 1 und 3 auf der Verbindungslinie D1 bzw. der Gegenhaltekraft-Differenz $\Delta F_{D2}$ zwischen den Diagonal-Gegenhaltezylindereinheiten 2 und 4 auf der Verbindungslinie D2 läßt sich die augenblickliche Lage der Wirkkraft $F_W$ auf D1 bzw. D2 errechnen aus (vgl. dazu Fig. 5a

bzw. b):

$$\Delta F_{D1} \times c = F_W \times (-a) \quad \text{bzw.} \quad \Delta F_{D2} \times c = F_W \times (-b).$$

Aus den - beispielsweise über Druckmessungen - fortlaufend ermittelten Werten für die Größe der Preßkraft $F_P$ und der Gegenhaltekraft-Differenz zwischen den in Frage kommenden Diagonal-Gegenhaltezylindereinheiten 1, 3 bzw. 2, 4 läßt sich also jeweils die augenblickliche Lage des Wirkkraftzentrums auf der zugehörigen Verbindungslinie D1 bzw. D2 bestimmen mit der Möglichkeit, die gewonnenen (a, b)-Abstandswerte in die (x-, y-)-Abstandswerte eines rechtwinkligen Achsenkreuzes umzurechnen. In Abhängigkeit von den ermittelten (a, b)-Abstandswerten wird - wie bereits anhand der Fig. 3a bis e erläutert worden ist - das bewegliche Werkzeugteil durch Verändern der Stellung der zusammenwirkenden Gegenhaltezylindereinheiten 1, 3 bzw. 2, 4 in der Weise bewußt schräggestellt, daß sich der Formhohlraum-Querschnitt in Richtung auf den Verbindungslinien-Abschnitt vergrößert, dem das Wirkkraftzentrum nicht zugeordnet ist. Bei der in Fig. 4 dargestellten Situation wird das Werkzeug-Oberteil 10 (vgl. dazu Fig. 3b und 3c) also in der Weise geneigt, daß sich der Formhohlraum-Querschnitt in Richtung auf die Gegenhaltezylindereinheiten 1 und 2 erweitert, also in Richtung auf die Gegenhaltezylindereinheiten, von denen - bedingt durch die Lage des Wirkkraftzentrums auf der bezüglich des Nullpunktes N gegenüberliegenden Seite der jeweiligen Verbindungslinie D1 bzw. D2 - die größeren Gegenhaltekräfte ausgeübt werden.

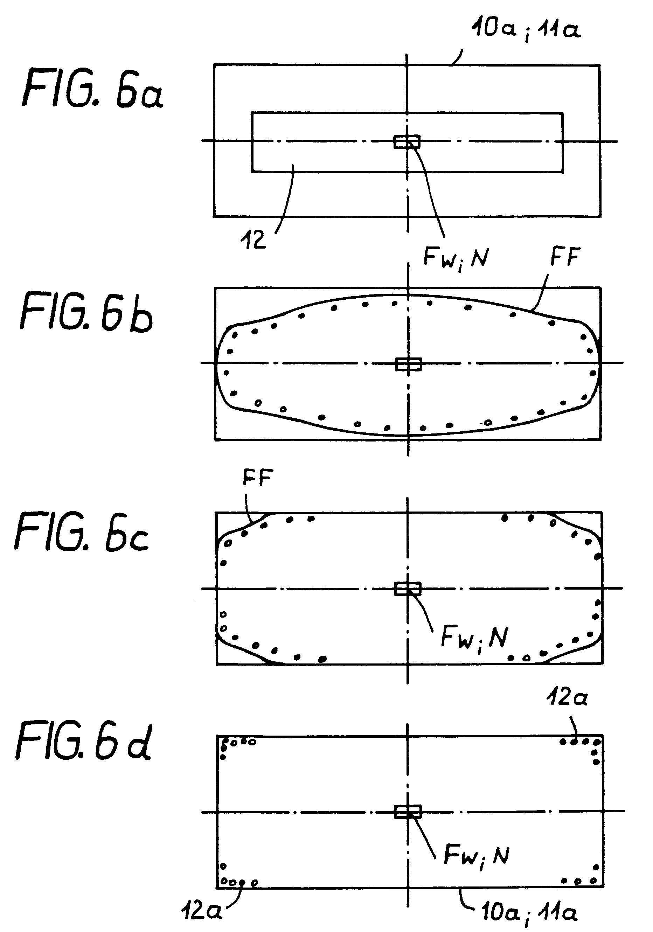

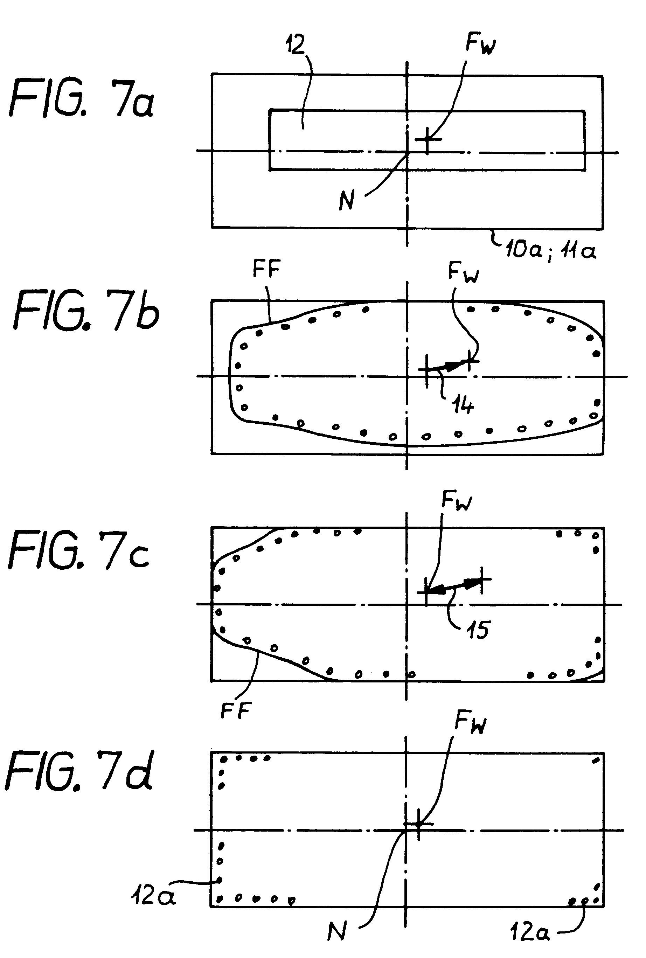

Das Verhalten der Preßmasse 12 während des Auspressens und die sich daraus ergebenden Eigenschaften des hergestellten Preßteils unter optimalen bzw. ungünstigen Betriebsbedingungen lassen sich den Fig. 6a bis d bzw. 7a bis d entnehmen, in denen schematisch die den Formhohlraum nach außen begrenzenden Preßwerkzeug-Tauchkanten 10a und 11a dargestellt sind.

Unter optimalen Bedingungen (symmetrische Preßstellung und "symmetrische" Ausbildung der Preßmasse 12) bewegt sich die durch Druck- und Hitzeeinwirkung erzeugte Fließfront FF gleichmäßig nach allen Seiten, so daß sie die Tauchkanten gleichzeitig zunächst auf der linken und rechten Seite (Fig. 6b) und anschließend gleichzeitig an den Längsseiten (Fig. 6c) erreicht, und zwar ohne Entstehung nicht erwünschter Umkehrflüsse. Angesichts der geschilderten symmetrischen Verhältnisse und Bewegungsvorgänge fällt das Wirkkraftzentrum $F_W$ stets mit der Symmetrieachse des Preßwerkzeugs (also dem in Fig. 4 dargestellten Nullpunkt N) zusammen.

Mit dem Fortschreiten des Auspreßvorgangs (Fig. 6d) füllt die Preßmasse den gesamten Formhohlraum aus; etwaige Porösitätsbereiche liegen angesichts der vorausgehenden symmetrischen Bewegungsvorgänge symmetrisch verteilt im Eckbereich des Formhohlraums.

Die in Fig. 7a dargestellte asymmetrische Preßstellung der Preßmasse 12 hat zur Folge, daß das Wirkkraftzentrum $F_W$ außerhalb des Nullpunktes N liegt. Während des Auspreßvorgangs erreicht die Fließfront FF nacheinander die in der Darstellung auf der rechten bzw. an der oberen Querseite liegenden Tauchkantenabschnitte, wodurch Umkehrflußvorgänge hervorgerufen werden; diese haben außerdem eine Verschiebung des Wirkkraftzentrums $F_W$ in Richtung des Pfeiles 14 zur Folge (Fig. 7b). Mit dem Fortschreiten des Auspreßvorgangs (Fig. 7c) bewegt sich das Wirkkraftzentrum Fw - angedeutet durch den Doppelpfeil 15 - wieder auf den Nullpunkt N zu und nimmt gegen Ende des Auspreßvorgangs die in Fig. 7d gezeigte Lage außerhalb des Nullpunktes N ein. Bedingt durch die unsymmetrischen Bewegungs- und die Umkehrflußvorgänge weist die den Formhohlraum ausfüllende Preßmasse beispielsweise ungleichmäßig verteilte Porösitätsbereiche 12a auf, die eventuell zusätzliche Bearbeitungsvorgänge erforderlich machen und/oder die Verwendbarkeit des Preßteils zumindest beeinträchtigen. Die Umkehrflußvorgänge können auch zu unerwünschten Faserorientierungen und/oder zu einer ungleichmäßigen Dichteverteilung führen, welche unter Umständen die Festigkeit des Preßteils erheblich herabsetzt bzw. herabsetzen.

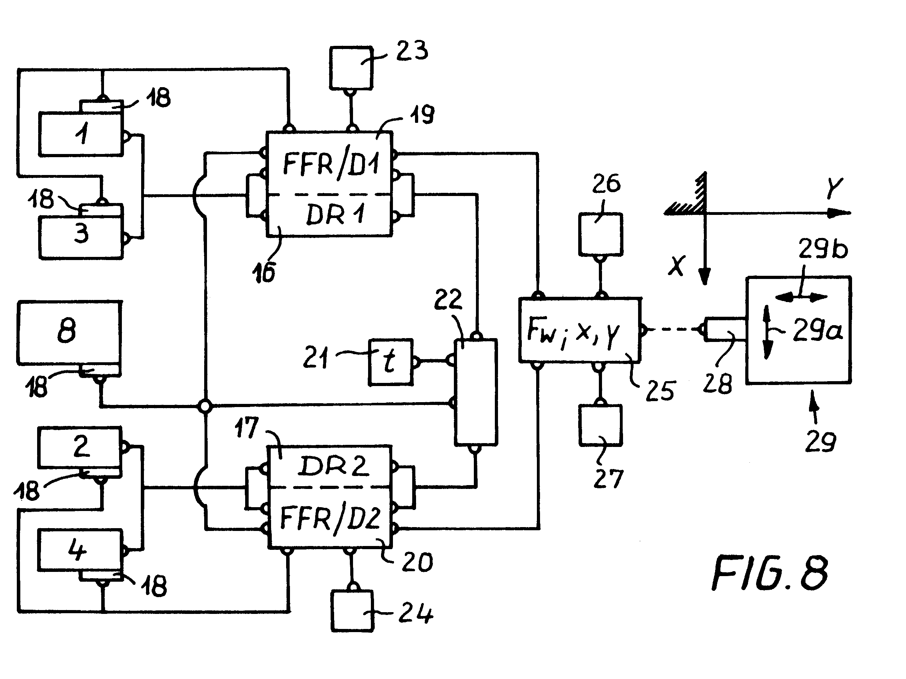

Der grundsätzliche steuerungstechnische Aufbau der Erfindung ist der Fig. 8 entnehmbar. Die beiden jeweils zusammenwirkenden Diagonal-Gegenhaltezylindereinheiten 1, 3 bzw. 2, 4 werden bis zum Beginn des Auspressens bzw. nach Abschluß der Fließvorgänge mittels einer Diagonalregelung 16 bzw. 17 (DR1 bzw. DR2) parallel zu einer Bezugsebene ausgeregelt. Nach der Lehre der Erfindung weisen sämtliche Gegenhaltezylindereinheiten 1 bis 4 und der Preßantrieb 8 Druckmeßsensoren 18 auf, über welche aus der Größe der Preßkraft und einer etwaigen Differenz zwischen den Gegenhaltekräften der zusammenwirkenden Gegenhaltezylindereinheiten auf der Verbindungslinie D1 bzw. D2 zwischen diesen die Lage des Zentrums der auf die Preßmasse ausgeübten Wirkkraft ermittelt werden kann (vgl. dazu Fig. 4 und Fig. 5a, b). Die Lage des jeweiligen Wirkkraftzentrums und die sich daraus ergebende Beeinflussung der Stellung (also des Hubes) der Diagonal-Gegenhaltezylindereinheiten erfolgt mittels einer Fließfrontregelung 19 bzw. 20 (FFR/D1 bzw. FFR/D2). Diese wird unmittelbar nach Auspreßbeginn über eine von einem Zeitglied 21 beeinflußte Schalteinheit 22 in Betrieb gesetzt, die gleichzeitig die bis dahin wirksame Diagonalregelung 16 bzw. 17 abschaltet.

Die Schalteinheit 22 läßt in dem dargestellten Ausführungsbeispiel die Fließfrontregelung 19 bzw. 20 wirksam werden, sobald der Druckanstieg im Antriebsmittel für den Preßantrieb 8 - überwacht durch den zugehörigen Druckmeßsensor 18 - einen vorgegebenen Grenzwert überschreitet. Die Zeitdauer, während welcher die Fließfrontregelung die Stellung der zusammenwirkenden Diagonal-Gegenhaltezylindereinheiten 1, 3 bzw. 2, 4 im Sinne des erfindungsgemäßen Lösungsgedanken an die Lage des Wirkkraftzentrums anpaßt, ist durch das Zeitglied 21 festgelegt. Dieses steuert nach Ablauf der in Frage kommenden Zeitspanne die Schalteinheit 22 in der Weise um, daß die zusammenwirkenden Diagonal-Gegenhaltezylindereinheiten erneut unter Einfluß der Diagonalregelung 16 bzw. 17 ausgeregelt werden.

Eine fortlaufende Überwachung des Preßvorgangs, die gegebenenfalls auch Rückschlüsse auf die Eigenschaften und die Qualität des hergestellten Preßteils zuläßt, läßt sich dadurch ermöglichen, daß die Größe und die Lage des Wirkkraftzentrums auf der zugehörigen Verbindungslinie D1 bzw. D2 fortlaufend mittels eines Anzeigegerätes 23 bzw. 24 sichtbar gemacht werden (beispielsweise in digitaler Form durch Angabe des Absolutbetrages der Wirkkraft und der zugehörigen Abstandswerte +/- a, +/- b; vgl. dazu Fig. 4).

Die von der Fließfrontregelung 19 bzw. 20 gelieferten Informationen betreffend das jeweilige Wirkkraftzentrum werden in einen Rechner 25 umgerechnet auf ein bezüglich des Pressentisches paralles Achsenkreuz mit x-, y-Koordinaten (vgl. dazu Fig. 8, rechte Seite und Fig. 4); die errechneten Daten (Absolutbetrag der Wirkkraft $F_W$; Lage des zugehörigen Wirkkraftzentrums bezüglich des Nullpunktes in x-, y-Koordinaten) werden mittels eines dem Rechner zugeordneten Anzeigegerätes 26 fortlaufend dargestellt.

Vorzugsweise ist der Erfindungsgegenstand auch in der Weise ausgestaltet, daß er eine iterative, also schrittweise Optimierung der Arbeitsbedingungen beim Auspressen ermöglicht.

Zu diesem Zweck ist der Rechner 25 zusätzlich mit einem Speicher 27 zur Aufnahme und Verarbeitung der x-, y-Abstandswerte ausgestattet, die anläßlich der zeitlich ersten Ermittlung der Lage des Wirkkraftzentrums - also unmittelbar nach Auspreßbeginn - errechnet worden sind.

Der Rechner übermittelt den festgestellten x-, y-Abstandswerten entsprechende Steuerimpulse an eine Antriebseinheit 28; über diese ist eine Zuführeinheit, welche die Preßmasse in dem Bereich des Preßwerkzeugs transportiert, entsprechend den Doppelpfeilen 29a, 29b in x- bzw. y-Richtung des bereits erwähnten rechtwinkligen Achsenkreuzes verfahrbar.

Unter dem Einfluß der Antriebseinheit 28 wird die Zuführeinheit 29 in jedem Falle so bewegt, daß die im Anschluß an den vorausgegangenen Arbeitszyklus neu zuzuführende Preßmasse erst dann die Preßstellung einnimmt, nachdem ihre Lage der Größe des x- und y-Abstandswertes entsprechend korrigiert worden ist.

Die Erfindung ermöglicht es also auch, die mittels des Rechners 25 festgestellten Abstandswerte iterativ dadurch gegen Null zu führen, daß die neue Preßmasse, die im Anschluß an die Ermittlung der Größe und Lage des Wirkkraftzentrums in das Preßwerkzeug eingelegt wird, bis zum Erreichen der Preßstellung die erforderlichen Ausgleichsbewegungen ausführt.

Die Lagekorrektur der nachfolgenden Preßmasse kann dabei insbesondere in der Weise herbeigeführt werden, daß - abgesehen von der eigentlichen Transportbewegung (in Fig. 8 in y-Richtung des feststehenden Achsenkreuzes) - vor dem Eintritt in das Preßwerkzeug eine Ausgleichsbewegung lediglich in einer Richtung, beispielsweise in x-Richtung des Achsenkreuzes, ausgelöst wird.

Der mit der Erfindung erzielte Vorteil besteht insbesondere darin, daß einerseits während des Auspreßvorgangs durch Schrägstellen des beweglichen Werkzeugteils unmittelbar unerwünschten Fließvorgängen entgegengewirkt und andererseits durch Ausgleichsbewegungen der für den nachfolgenden Arbeitszyklus zugeführten Preßmasse diese unter Berücksichtigung der im vorausgehenden Arbeitszyklus gewonnenen Informationen von vornherein in eine günstigere Preßstellung gebracht werden kann.

Darüber hinaus bietet die Erfindung die Möglichkeit, die während des Preßvorgangs ablaufenden Fließvorgänge gezielt in der Weise zu beeinflussen, daß sie in Abhängigkeit von der Zeit einen gewünschten Verlauf nehmen.

Aufgrund der fortlaufend ermittelten Daten über die Größe und Lage des Wirkkraftzentrums kann dieses erforderlichenfalls in der Weise beeinflußt werden, daß an einer bestimmten Stelle des Formhohlraums oder in vorgegebener zeitlicher Reihenfolge Umkehrflüsse auftreten.

Die erfindungsgemäße Lehre ist selbstverständlich auch anwendbar, wenn Preßwerkzeuge mit unsymmetrisch ausgebildetem Formhohlraum und/oder unsymmetrisch ausgebildete Preßmassen zum Einsatz kommen. In derartigen Fällen ist zunächst einmal - beispielsweise durch einen Probelauf - ein den Nullpunkt festlegender Korrekturwert zu bestimmen, welcher bei der Ermittlung der Lage des Wirkkraftzentrums während des Auspreßvorgangs mitzuberücksichtigen ist.

## Patentansprüche

1. Verfahren zur Beeinflussung der Fließfrontbewegung im Hinblick auf die gezielte Steuerung oder auf die Abschwächung von Umkehrflußvorgängen beim Auspressen von Preßmassen, insbesondere bei aus Faserverbundwerkstoffen hergestellten Harzmatten, im Formhohlraum (Kavität) von Preßwerkzeugen, deren mit der Preßkraft beaufschlagtes Werkzeugteil (10) durch Abstützen an vier Gegenhaltezylindereinheiten (1-4) ausgerichtet wird, wobei die Stellung der sich diagonal gegenüberliegenden Diagonal-Gegenhaltezylindereinheiten jeweils über eine Diagonalregelung aufeinander abgestimmt wird,
   **dadurch gekennzeichnet**,
   - daß unmittelbar nach Auspreßbeginn die Preßkraft und die jeweils von den Gegenhaltezylindereinheiten (1-4) ausgehenden Gegenhaltekräfte bestimmt werden;
   - daß aus der Größe der Preßkraft ($F_P$) und aus einem etwaigen Differenzbetrag ($\Delta F_{D1}$ bzw $\Delta F_{D2}$ zwischen den Gegenhaltekräften der Diagonal-Gegenhaltezylindereinheiten jeweils die Lage des Zentrums (Z) der auf die Preßmasse ausgeübten Wirkkraft auf der Verbindungslinie ($D_1$ bzw $D_2$) zwischen den Diagonal-Gegenhaltezylindereinheiten bezüglich eines Nullpunktes (N) in Form eines Positiv-/Negativ-Abstandswertes ermittelt wird und
   - daß anschließend während des fortschreitenden Auspreßvorgangs aufgrund der fortlaufend festgestellten Abstandswerte bis zum Abschluß der Fließvorgänge die Stellung der Diagonal-Gegenhaltezylindereinheiten (1-4) in der Weise eingestellt wird, daß die durch Schrägstellen des beweglichen Werkzeugteils (10) hervorgerufene Erweiterung des Formhohlraum-Querschnitts die Fließfrontbewegung in Richtung dieser Erweiterung unterstützt.

2. Verfahren nach Anspruch 1, dadurch gekennzeichnet, daß im Anschluß an die zeitlich erste Ermittlung der Abstandswerte auf den beiden Diagonalen das bewegliche Werkzeugteil durch Stellungsanpassung der Diagonal-Gegenhaltezylindereinheiten unmittelbar in Abhängigkeit von der augenblicklichen Größe der Abstandswerte ausgerichtet wird.

3. Verfahren nach zumindest einem der Ansprüche 1 bis 2, dadurch gekennzeichnet, daß spätestens nach Abschluß der Fließvorgänge bis gegen Ende des Auspreßvorgangs die Stellung der Diagonal-Gegenhaltezylindereinheiten - ebenso wie bis zum Zeitpunkt der zeitlich ersten Ermittlung der Lage des Wirkkraftzentrums auf den Verbindungslinien - über eine Parallelregelung eingestellt wird.

4. Verfahren nach zumindest einem der Ansprüche 1 bis 3, dadurch gekennzeichnet, daß die Preßkraft und die Gegenhaltekräfte über Druckmessungen bestimmt werden.

5. Verfahren nach zumindest einem der Ansprüche 1 bis 4, dadurch gekennzeichnet, daß die Stellung der Diagonal-Gegenhaltezylindereinheiten im Anschluß an die zeitlich erste Ermittlung der Abstandswerte in der Weise verändert wird, daß die Abstandswerte spätestens bis zum Ende des Auspreßvorgangs gegen Null geführt werden.

6. Verfahren nach zumindest einem der Ansprüche 1 bis 5, dadurch gekennzeichnet, daß die nach Auspreßende zugeführte neue Preßmasse bis zum Abschluß des Zuführvorgangs eine Korrekturbewegung ausführt, mittels der die Abstandswerte ausgeglichen werden, welche anläßlich der zeitlich ersten Ermittlung der Lage des Wirkkraftzentrums unmittelbar nach Beginn des Auspressens der vorhergehenden Preßmasse festgestellt worden sind.

7. Verfahren nach zumindest einem der Ansprüche 1 bis 6, dadurch gekennzeichnet, daß aufgrund der Abstandswerte und der Größe des Wirkkraftzentrums das Wirkkraftzentrum nach Größe und Lage bezüglich eines zu einer Bezugsebene des Preßwerkzeugs parallelen x-, y-Achsenkreuzes bestimmt wird.

8. Verfahren nach Anspruch 6 und 7, dadurch gekennzeichnet, daß die Lage der neuen Preßmasse vor Eintritt in das Preßwerkzeug lediglich in einer Richtung des x-, y-Achsenkreuzes eingestellt wird.

9. Verfahren nach zumindest einem der Ansprüche 6 bis 8, dadurch gekennzeichnet, daß die neue Preßmasse bis zum Abschluß des Zuführvorgangs als Ausgleichsbewegung auch eine Drehbewegung ausführt.

10. Verfahren nach zumindest einem der Ansprüche 1 bis 9, dadurch gekennzeichnet, daß die Lage des Wirkkraftzentrums auf den Verbindungslinien und/oder des Wirkkraftzentrums bezüglich des x-, y-Achsenkreuzes während des Auspreßvorgangs zumindest zeitweilig sichtbar gemacht wird.

11. Einrichtung an Pressen, deren mit der Preßkraft beaufschlagtes Werkzeugteil an vier Gegenhaltezylindereinheiten abgestützt ist, wobei jeweils die sich diagonal gegenüberliegenden Diagonal-Gegenhaltezylindereinheiten mit einer ihre Stellung ausregelnden Diagonalregelung ausgestattet sind, zur Durchführung des Verfahrens nach zumindest einem der Ansprüche 1 bis 10, **dadurch gekennzeichnet**,
   - daß die Gegenhaltezylindereinheiten (1 bis 4) und der Preßantrieb (8) mit Druckmeßsensoren (18) zur Ermittlung der Gegenhaltekräfte (F 1 bis F 4) und der Preßkraft ($F_P$) ausgestattet sind;
   - daß die Druckmeßsensoren (18) der Diagonal-Gegenhaltezylindereinheiten (1,3 bzw. 2,4) mit dem Druckmeßsensor (18) des Preßantriebs (8) jeweils zu einem Fließfrontsensor zusammengefaßt sind, mit dem aus der Größe der Preßkraft ($F_P$) und einer etwaigen Gegenhaltekraft-Differenz ($\Delta F_{D1}$ bzw. $\Delta F_{D2}$) die Größe und Lage des Zentrums (Z) der auf die Preßmasse (12) ausgeübten Wirkkraft ($F_W$) auf den Verbindungslinien (D1 bzw. D2) zwischen den Diagonal-Gegenhaltezylindereinheiten bezüglich eines Nullpunktes (N) feststellbar ist und
   - daß die Diagonal-Gegenhaltezylindereinheiten (1 bis 4) jeweils mit einer Steuereinheit (19 bzw. 20) ausgestattet sind, die während einer einstellbaren Zeitdauer abhängig von der Lage des Wirkkraftzentrums jeweils die Stellung der Diagonal-Gegenhaltezylindereinheiten in der Weise beeinflußt, daß durch Schrägstellen des beweglichen Werkzeugteils (10) der Formhohlraum-Querschnitt eine Erweiterung aufweist, welche die Fließfrontbewegung auf der dem Wirkkraftzentrum gegenüberliegenden Seite des Nullpunktes (N) unterstützt.

12. Einrichtung nach Anspruch 11, dadurch gekennzeichnet, daß dem Fließfrontsensor ein Rechner (25) nachgeschaltet ist, mit dem aufgrund der festgestellten Größe und Lage der Wirkkräfte fortlaufend die augenblickliche Größe und Lage des Wirkkraftzentrums bezüglich eines zu einer Bezugsebene des Preßwerkzeugs (10, 11) parallelen x-, y-Achsenkreuzes ermittelt wird.

13. Einrichtung nach Anspruch 12, gekennzeichnet durch eine Anzeigeeinheit (26), welche die Lage (Z) des Wirkkraftzentrums erkennbar macht.

14. Einrichtung nach zumindest einem der Ansprüche 12 bis 13, dadurch gekennzeichnet, daß über die vom Rechner (25) erzeugten Steuersignale - entsprechend den x-, y-Abstandswerten, die anläßlich der zeitlich ersten Ermittlung der Lage (Z) des Wirkkraftzentrums errechnet worden sind - die Zuführeinheit (29) für die Preßmasse (12) in der Weise antreibbar ist, daß die nach Auspreßende zugeführte neue Preßmasse bis zum Abschluß des Zuführvorgangs zusätzlich eine der Größe dieser Abstandswerte entsprechende Korrekturbewegung ausführt.

**Claims**

1. Method of influencing flow front movement with a view to the purposeful control or the reduction of reverse flow processes during the pressing out of moulding preparations, particularly resin impregnated mats manufactured from fibre composites, in the mould cavity of pressing tools, whose tool part (10) acted upon by the pressing force is aligned by being supported on four supporting cylinder units (1-4), with the positions of the diagonally opposed diagonal supporting cylinder units being tuned to one another in each case by means of a diagonal control device, characterized in
   - that immediately after pressing-out begins, the pressing force and the supporting forces emanating from the supporting cylinder units (1-4) are determined;
   - that, from the quantity of the pressing force ($F_P$) and from a possible difference ($\Delta F_{D1}$ or $\Delta F_{D2}$) between the supporting forces of the diagonal supporting cylinder units, the position of the centre (Z) of the effective force exerted upon the moulding preparation on the connecting line ($D_1$ or $D_2$) between the diagonal supporting cylinder units is determined relative to a zero point (N) in the form of a positive/negative distance value, and
   - that subsequently, as the pressing-out process continues, the position of the diagonal supporting cylinder units (1-4) is adjusted on the basis of the continuously determined distance values up to completion of the flow processes in such a way that the widening of the mould cavity cross-section caused by inclining the movable tool part (10) boosts the flow front movement in the direction of said widening.

2. Method according to claim 1, characterized in that, subsequent to the first determination of the distance values on the two diagonals, the movable tool part is aligned by adapting the position of the diagonal supporting cylinder units directly as a function of the instantaneous quantity of the distance values.

3. Method according to at least one of claims 1 to 2, characterized in that, at the latest after completion of the flow processes up to towards the end of the pressing-out process, the position of the diagonal supporting cylinders is adjusted - just as up to the moment of the first determination of the position of the effective force centre on the connecting lines - by a parallel control device.

4. Method according to at least one of claims 1 to 3, characterized in that the pressing force and the supporting forces are determined by pressure measurements.

5. Method according to at least one of claims 1 to 4, characterized in that, subsequent to the first determination of the distance values, the position of the diagonal supporting cylinder units is varied in such a way that the distance values are brought towards zero at the latest by the end of the pressing-out process.

6. Method according to at least one of claims 1 to 5, characterized in that the new moulding preparation, which is supplied after the end of pressing-out, up to completion of the supply process executes a correction movement which compensates the distance values which were determined on the occasion of the first determination of the position of the effective force centre immediately after the start of pressing out the preceding moulding preparation.

7. Method according to at least one of claims 1 to 6, characterized in that, on the basis of the distance values and the quantity of the effective force centre, the quantity and position of the effective force centre are determined in relation to an x, y axis intersection parallel to a reference plane of the pressing tool.

8. Method according to claim 6 and 7, characterized in that the position of the new moulding preparation prior to entry into the pressing tool is adjusted in one direction of the x, y axis intersection only.

9. Method according to at least one of claims 6 to 8, characterized in that the new moulding preparation up to completion of the supply process also executes a rotational movement as a compensation movement.

10. Method according to at least one of claims 1 to 9, characterized in that the position of the effective force centre on the connecting lines and/or of the effective force centre in relation to the x, y axis intersection is rendered visible at least temporarily during the pressing-out process.

11. Device in presses, whose tool part acted upon by the pressing force is supported on four supporting cylinder units, with the diagonally opposing diagonal supporting cylinder units in each case being equipped with a diagonal control device for correcting their position, for effecting the method according to at least one of claims 1 to 10, characterized in

- that the supporting cylinder units (1 to 4) and the press drive (8) are equipped with pressure-measuring sensors (18) for determining the supporting forces (F 1 to F 4) and the pressing force ($F_p$;
- that the pressure-measuring sensors (18) of the diagonal supporting cylinder units (1, 3 and 2, 4) are in each case combined with the pressure-measuring sensor (18) of the press drive (8) to form a flow front sensor by means of which, from the quantity of the pressing force ($F_p$) and from a possible supporting force difference ($\Delta F_{D1}$ or $\Delta F_{D2}$), the quantity and position of the centre (Z) of the effective force ($F_W$) exerted upon the moulding preparation (12) on the connecting lines ($D_1$ or $D_2$) between the diagonal supporting cylinder units may be determined relative to a zero point (N), and
- that the diagonal supporting cylinder units (1 to 4) are in each case equipped with a control unit (19 or 20), which during an adjustable period as a function of the position of the effective force centre influences the position of the diagonal supporting cylinder units in such a way that, by inclining the movable tool part (10), the mould cavity cross-section has a widening which boosts the flow front movement at the opposite side of the zero point (N) to the effective force centre.

12. Device according to claim 11, characterized in that connected downstream of the flow front sensor is a computer (25) by means of which, on the basis of the determined quantity and position of the effective forces, the instantaneous quantity and position of the effective force centre is continuously determined in relation to an x, y axis intersection parallel to a reference plane of the pressing tool (10, 11).

13. Device according to claim 12, characterized by a display unit (26) which displays the position (Z) of the effective force centre.

14. Device according to at least one of claims 12 to 13, characterized in that by means of the control signals generated by the computer (25) - in accordance with the x, y distance values which were calculated on the occasion of the first determination of the position (Z) of the effective force centre - the supply unit (29) for the moulding preparation (12) may be driven in such a way that the new moulding preparation, which is supplied after the end of pressing-out, up to completion of the supply process additionally executes a correction movement corresponding to the quantity of said distance values.

## Revendications

1. Procédé pour agir sur le mouvement du front d'écoulement, en vue de la commande de la machine ou pour réduire les écoulements de retour, dans le cas de pressage de masses à mouler sous pression, en particulier dans le cas de mats imprégnés de résine, fabriqués à partir de matières composites à base de fibres, dans le volume creux, formant moule, (cavité) d'outils de presse, dont la partie d'outil (10), soumise à la force de pressage, est orientée par des appuis sur quatre unités de vérins (1 - 4) de contre-pression, la position de chacune de ces unités de vérins de contre-pression, situées diagonalement en en opposition l'une de l'autre, étant déterminée l'une par rapport à l'autre par un réglage diagonal, caractérisé
   - en ce que, directement après le début du pressage, on détermine la force de pressage et les contre-forces de maintien provenant des unités de vérins (1 - 4) de contre-pression,
   - en ce qu'à partir de la force de pressage (Fp) et à partir d'une valeur éventuelle de la différence (respectivement $\Delta FD1$ et $\Delta FD2$) entre les contre-forces de maintien des unités diagonales de vérins (1 - 4) de contre-pression, on détermine chaque fois, sous la forme d'une valeur positive/négative de la distance, la position du centre (Z) de la force agissante exercée sur la masse de pressage sur la ligne de raccordement (respectivement D1 et D2) reliant en diagonale les unités de vérins de contre-pression par rapport à un point zéro (N), et
   - en ce qu'ensuite, pendant l'opération de pressage qui se poursuit, en raison des valeurs de la distance, déterminées en continu jusqu'à la fin de l'opération d'écoulement, on règle la position des unités de vérins (1 - 4) de contre-pression de telle façon que l'élargissement de la section de la section du volume creux de moule, provoqué par le positionnement oblique de la pièce mobiles d'outil (10), aide le mouvement du front d'écoulement dans la direction de cet élargissement.

2. Procédé suivant la revendication 1, caractérisé en ce qu'aussitôt après la première détermination dans le temps des valeurs des distances sur les deux diagonales, la partie mobile d'outil est orientée directement, en ajustant la position des unités diagonales de vérins de contre-pression, en fonction de la grandeur instantanée des valeurs des distances.

3. Procédé suivant au moins la revendication 1 ou la revendication 2, caractérisé en ce qu'au plus tard après la fin des opérations d'écoulement, jusqu'à environ la fin de l'opération de pressage, on règle la position des unités diagonales de vérins de contre-pression - de même que jusqu'à l'instant de la première détermination dans le temps de la position du centre de la force agissant sur les lignes de raccordement -, au moyen d'un réglage du parallélisme.

4. Procédé suivant au moins l'une quelconque des revendications 1 à 3, caractérisé en ce que la force de pressage et les contre-forces de maintien sont déterminées par des mesures de pression.

5. Procédé suivant au moins l'une quelconque des revendications 1 à 4, caractérisé en ce que la position des unités diagonales de vérins de contre-pression est modifiée, ausitôt après la première détermination dans le temps des valeurs de distances, de telle façon que les valeurs des distances soit amenées sensiblement à zéro, au plus tard jusqu'à la fin de l'opération de pressage.

6. Procédé suivant au moins l'une quelconque des revendications 1 à 5, caractérisé en ce que la nouvelle masse de pressage, mise en place après la fin de l'opération de pressage, effectue un mouvement de correction jusqu'à la fin de de l'opération d'alimentation, mouvement de correction au moyen duquel on equilibre les valeurs de distance, qui ont été définies en fonction de la première détermination dans le temps de la position du centre de la force active, directement après le début du pressage de la masse de pressage précédente.

7. Procédé suivant au moins l'une quelconque des revendications 1 à 6, caractérisé en ce qu'en se basant sur les valeurs de distance et sur la grandeur du centre de la force active, on détermine le centre de la force active en grandeur et en position, par rapport à un système de coordonnées x, y parallèle à un plan de référence de l'outil de pressage.

8. Procédé suivant les revendications 6 et 7, caractérisé en ce que la position de la nouvelle masse de pressage, avant son entrée dans l'outil de pressage, est purement et simplement réglée dans une direction du système de coordonnées x, y.

9. Procédé suivant au moins l'une quelconque des revendications 6 à 8, caractérisé en ce que la nouvelle masse de pressage, jusqu'à ce que soit terminée l'opération d'alimentation, effectue comne mouvement d'équilibrage, également un mouvement de rotation.

10. Procédé suivant au moins l'une quelconque des revendications 1 à 9, caractérisé en ce que la position du centre de la force active sur les lignes de raccordement et/ou la position du centre de la force active par rapport au système d'axes de coordonnées x, y soit rendue visible, au moins temporairement, pendant l'opération de pressage.

11. Dispositif monté sur presse, dont l'outil de pressage, soumis à la pression de pressage, prend appui sur quatre unités de vérins de contre-pression, chacune de ces unités de vérins de contre-pression, disposées diagonalement en opposition, étant conçue avec un réglage en diagonale réglant leur position, pour la mise en oeuvre du procédé suivant au moins l'une des revendications 1 à 10, caractérisé

- en ce que les unités de vérins (1 à 4) de contre-pression et l'entraînement du pressage (8) sont réalisés avec des capteurs de pression (18) pour déterminer les forces de contre-pression (F 1 et F 4) et la force de pressage (Fp),
- en ce que les capteurs de pression (18) des unités diagonales de vérins (respectivement 1, 3 et 2, 4) de contre-pression et le capteur de pression (18) de l'entraînement du pressage (8) sont chacun regroupés pour former un détecteur du front d'écoulement, avec lequel, à partir de la la force de pressage (Fp) et d'une éventuelle différence de la force de contre-pression (respectivement ΔFD1 et ΔFD2), on peut définir la grandeur et la position du centre (Z) de la force active (FW) exercée sur la masse de pressage (12), sur les lignes de raccordement (respectivement D1 et D2) entre les unités diagonales de vérins de contre-pression, par rapport à un point zéro (N),
- en ce que chacune des unités diagonales de vérins (1 à 4) de contre-pression est conçue avec une unité de commande (respectivement 19 et 20) qui, pendant une durée réglable, agit, en fonction de la position du centre de la force active, sur chacune des unités diagonales de vérins de contre-pression de telle façon qu'en positionnant obliquement la pièce d'outil mobile (10), la section du volume creux formant moule, présente un élargissement qui aide au mouvement du front d'écoulement du côté du point zéro (N) opposé au centre de la force active.

12. Dispositif suivant la revendication 11, caractérisé en ce qu'en aval du détecteur du front d'écoulement, est branché un ordinateur (25) avec lequel, à partir de la grandeur et de la position des forces actives que l'on a relevées, on détermine en continu la grandeur et la position instantanée du centre de la force active par rapport à un système de coordonnées x, y parallèle à un plan de référence de l'outil de pressage (10, 11).

13. Dispositif suivant la revendication 12, caractérisé par une unité d'affichage (26), indiquant la position (Z) du centre de la force agissante.

14. Dispositif suivant au moins la revendication 12 ou la revendication 13, caractérisé en ce qu'au moyen des signaux de commande émis par l'ordinateur (25) - correspondant aux valeurs de distance x, y qui ont été calculées en fonction de la première détermination dans le temps de la position (Z) du centre de la force active - l'unité d'alimentation (29) de la masse de pressage (12) peut être entraînée de telle façon que la nouvelle masse de pressage, approvisionnée après la fin du pressage, effectue, jusqu'à ce que soit terminée l'opération d'alimentation, en plus un mouvement de correction correspondant à la grandeur de ces valeurs de distance.

# FIG.1

FIG. 2a

FIG. 2b

FIG. 2c

FIG. 2d

FIG. 2e

FIG.3a

FIG.3b

FIG.3c

FIG.3d

FIG.3e

# FIG. 4

# FIG. 5a

# FIG. 5b

FIG. 6a

10a ; 11a

12

Fw ; N

FF

FIG. 6b

FF

FIG. 6c

Fw ; N

12a

FIG. 6d

Fw ; N

12a

10a ; 11a

FIG. 7a

12

Fw

N

10a; 11a

FIG. 7b

FF

Fw

14

FIG. 7c

Fw

15

FF

FIG. 7d

Fw

12a

N

12a

FIG.8

EP 0 401 501 B1